# EUROPEAN PATENT SPECIFICATION

(11) **EP 0 626 571 B1**
(45) Date of publication and mention of the grant of the patent: **02.06.1999**
(21) Application number: 94201196.6
(22) Date of filing: 29.04.1994
(51) Int. Cl.: G01K 7/02

(54) **An integrated temperature measuring unit with thermocouples**
Eine integrierte Temperaturmesseinheit mit Thermoelementen
Une unité de mesure intégrée utilisant des thermocouples

(30) Priority: 17.05.1993 IT MI931003
(43) Date of publication of application: 30.11.1994
(73) Proprietor: ANSALDO ENERGIA S.P.A., I-16152 Genova (IT)
(72) Inventor: Ronconi, Dante, I-16147 Genova (IT); Rizzo, Gianfranco, I-16129 Genova (IT)
(74) Representative: Maggioni, Claudio

(56) References cited:
- DE-A- 3 100 274
- FR-A- 2 219 405
- FR-A- 2 297 409
- US-A- 4 590 326
- US-A- 4 778 538
- NUCLEAR INSTRUMENTS AND METHODS, vol.215, no.1/2, September 1983, AMSTERDAM NL pages 113 - 129 VAN DRIEL E.A. 'THE EFFECT OF HEAT ON RADIATION DAMAGE IN LARGE NAI CRYSTALS'
- ELIGIO PERUCCA / FEDERICO FILIPPI: "DIZIONARIO D'INGEGNERIA" , , UNIONE TIPOGRAFICO-EDITRICE TORINESE, 1978

## Description

The present invention relates to an integrated temperature measuring unit employing thermocouples, and an associated measuring system.

It is known that for measuring relatively high temperatures on the order of hundreds of degrees, up to 1000-1200°C, thermocouples are widely employed as fairly accurate sensors of low cost having a relatively prompt response and minimal space requirements.

Despite such advantages, the measurement of temperatures by means of thermocouples is still beset with some drawbacks and limitations; work hardening, ageing, and oxidation alter their thermoelectric characteristics over time. In addition, thermoelectric joints for reference to a controlled temperature and connections between the measuring element and the reference element using compensated cables are required. Such limitations are known from measuring systems such as those revealed by PERUCCA:DIZIONARIO DI INGEGNERIA, Vol. VIII, pages 980-983, paragraphs F1=5-1 to F1=5-7 (UTET-TORINO-1978)

As a result, recalibration must be performed at frequent intervals, which involves removal of the sensing element from the system, and in most cases, shutting down the whole system.

These drawbacks are eliminated by the integrated temperature measuring unit employing thermocouples, and associated measuring system according to the claims, which form the subject-matter of the present invention, wherein plural, preferably three, thermocouples are preferably subjected to a preliminary normalizing and ageing treatment, are housed within a common protective sheath made preferably of stainless steel, and are connected, through the protective sheath, directly to corresponding reference joints housed in a well formed in an equalizer block of high thermal conductivity which is suitably isolated thermally from the ambience and also houses a precision thermal resistor for measuring the temperature of the reference joints.

The terminals of the different thermocouple and thermal resistor circuits are connected to the terminals of a connector for connection to meters by commonplace leads of copper.

According to an embodiment of the present invention, the thermocouples consist of N-type elements, owing their name to that they are made of NiCrSi-NiSi alloy having a high content of nickel, each housed within an integral sheath of NiCrSi, in turn protected by the stainless steel sheath, thereby effectively providing double protection for the sensors against ambient agents, which makes for extremely slow ageing processes to be further attenuated when the sensors are used at relatively low temperatures on the order of 500°C, far below the normal working temperatures for thermocouples of the N type.

According to a further embodiment of the present invention, the resultant integrated unit is coupled to an acquisition system to form an integrated measuring system which allows an accurate and reliable measurement of temperature to be taken as the mean of the temperatures individually sensed by each element, and troubleshooting and corrective interventions to be carried out "on line", that is without removing the sensors and shutting down the system which employs them, according to laws of majority logic and logic exclusion of the faulty element which enable servicing operations for remedying the fault to be differred until the next planned system shut-down.

The integrated unit and associated measuring system are applicable in particular to continuously operated plants, such as heating plants, for continuously monitoring the temperature of steam turbines, and more generally to any monitoring and troubleshooting systems requiring unbroken service.

The features and advantages of the invention will be apparent from the following description of a preferred embodiment thereof, and from the accompanying drawings wherein:
Figure 1 shows schematically a thermoelectric cable utilized to make the unit of the present invention,
Figure 2 shows an integrated measuring unit embodying the present invention, and
Figure 3 is a circuit diagram for a measuring system which employs the unit in Figure 2.

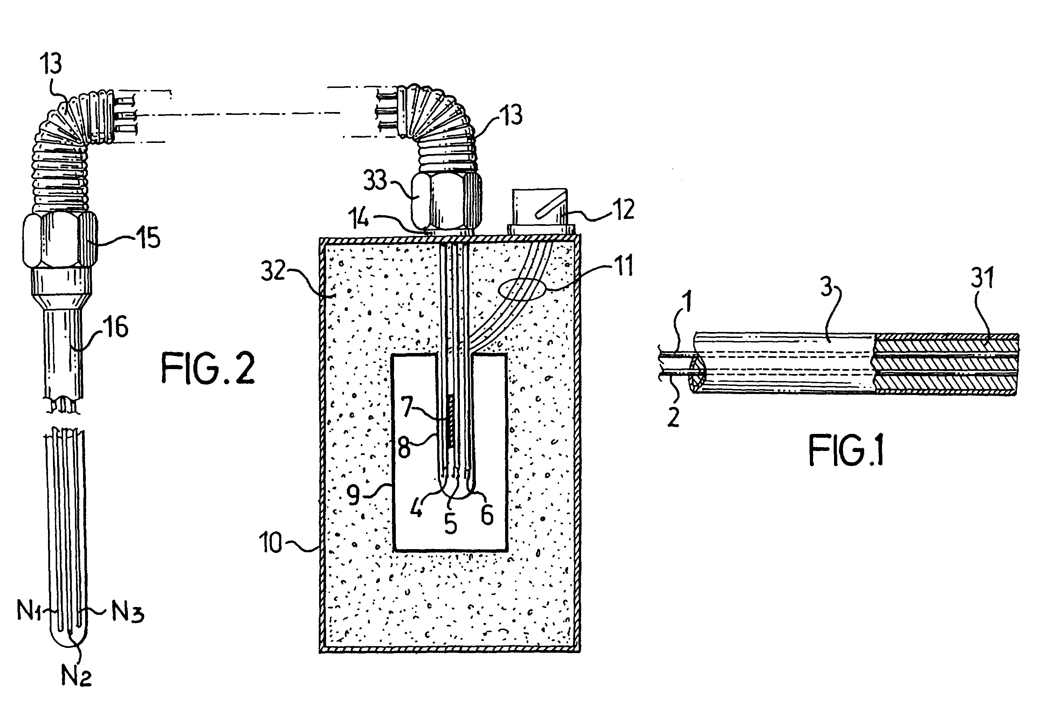

To make an integrated unit according to the invention, a thermocouple cable is used which is available commercially and comprises, as shown in Figure 1, a two-wire element, with one wire made of a nickel-chromium-silicon ternary alloy 1 and the other, 2, of nickel-chromium, the wires being isolated from each other and the sheath by means of an insulating mineral 31, preferably magnesia, and enclosed within a protective sheath 3, also of Ni-Cr-Si.

The product is available commercially in rolls and manufacturing by a drawing process which causes bench hardening of the wires.

As is known, nickel-chromium alloys are resistant to high temperatures and hot oxidation, but from the thermoelectric standpoint, are liable to ageing and to changes in their characteristics which depend on their processing and conditions of use.

To make the integrated unit forming the subject-matter of the present invention, the roll is then subjected to an accelerated ageing treatment which comprises annealing in a natural air circulation furnace, at a temperature in the 600°C range for 80 to 100 hours.

This treatment yields the material in an annealed and normalized form with a particularly stable surface oxidation that ensures a particularly slow, almost negligible, subsequent drift of the thermoelectric characteristics.

From the roll thus treated, sections of suitable length, e.g. 4-meter long, are cut and used to make the individual thermocouples, taking the casing for the compensation joint away from the hot areas where the thermal elements (e.g. steam pipes) are connected.

A first thermoelectric measuring junction is formed at one end of the section over which the protective sheath is sealed using an inert gas (TIG) or microflux torch with no material depositing.

At the other end, the terminations are coupled to copper extension leads and form a reference thermal junction (actually, a dual thermal junction) therewith.

The thermoelectric elements thus formed are subjected to a further normalizing heat treatment, whereupon they are ready for the final assembly which produces the integrated unit shown in Figure 2.

The assembly procedure consists of introducing the reference thermal junction of a triad of thermoelectric elements 4, 5, 6 thus formed, together with a thermal resistor 7, into a well 8 formed in a metal block 9 of high thermal conductivity comprising an aluminum cylinder having a diameter of 80 mm and height of 100 mm, for example.

The thermal junctions and resistor are embedded in epoxy resin poured into the well.

Preferably but not necessarily, the thermal resistor is a 4-wire one, two for supplying a controlled constant current, and two for measuring the voltage drop.

The metal block functions to equalize the well temperature by preventing the formation of thermal gradients between different areas of the well.

The equalizer block 9 is then placed centrally within a case 10 which is suitably filled with a material 32 providing effective thermal insulation, preferably foamed polyurethane.

The leads 11 connecting the thermoelectric elements and the terminations of the thermal resistor are connected to a connector 12 for connection to meters and monitoring instruments.

The thermoelectric elements 4, 5, 6 come out of the case 10 enclosing the reference joints through a union 144 and are inserted into a flexible protective sheath 13, preferably made of AISI 316 stainless steel, connected by a screw sleeve 33 to the union 14.

At its opposite end, the flexible sheath 13 is connected by a screw coupling 15 to a rigid sheath 16 consisting of a cylinder of AISI 316 stainless steel closed at one end, which accommodates the measuring junctions N1, N2, N3 of the thermoelectric elements.

The outside diameter of the sheath is conveniently of 6 mm and the length of 450 mm, so that the resultant triple thermoelement can be easily installed on thermometric wells of a standard type.

An integrated measuring unit, as shown in Figure, is thus obtained which comprises three separate thermoelectric measuring joints, each connected directly to the reference junction, using no intermediate balanced cables and thermostat-controlled cells.

The thermoelectric elements are integrally protected from mechanical stresses and oxidation phenomena by dual, individual and common, protections made of stainless steel.

When used at working temperatures below 550°C, they prove highly stable over time.

The result is, therefore, an integrated measuring unit which is strong and extremely reliable, characterized by redundancy or reiteration of the thermoelectric elements, wherein the occurrence of faults or failures does not impair, by virtue indeed of the measuring element redundancy, the unit functionality, and wherein the fault or failure can be found from the very inception thereof and the necessary corrective interventions planned, with no need for any immediate intervention.

The useful life span of the unit will, therefore, extend far beyond the useful safe life of the single measuring element.

In fact, the ageing or possible breakage phenomena, due to hidden inner strains which may put the heat sensing element out of operation, are not strictly deterministic, but subject to wide range variability, with substantially no likelihood that the ageing or breakage can simultaneosly affect the three elements.

Thus, using a majority control logic, the functionality of the single elements can be monitored by relative comparison, timely detecting possible malfunctions.

Further, the redundancy thus introduced can be advantageously utilized to ensure improved accuracy for the measurements by averaging operations on the indications from the individual elements, the mean being in this case weighted as the inverse function of the deviations from average of the individual indications, and the exclusion from the mean of one of the indications, when its deviation exceeds a predetermined value.

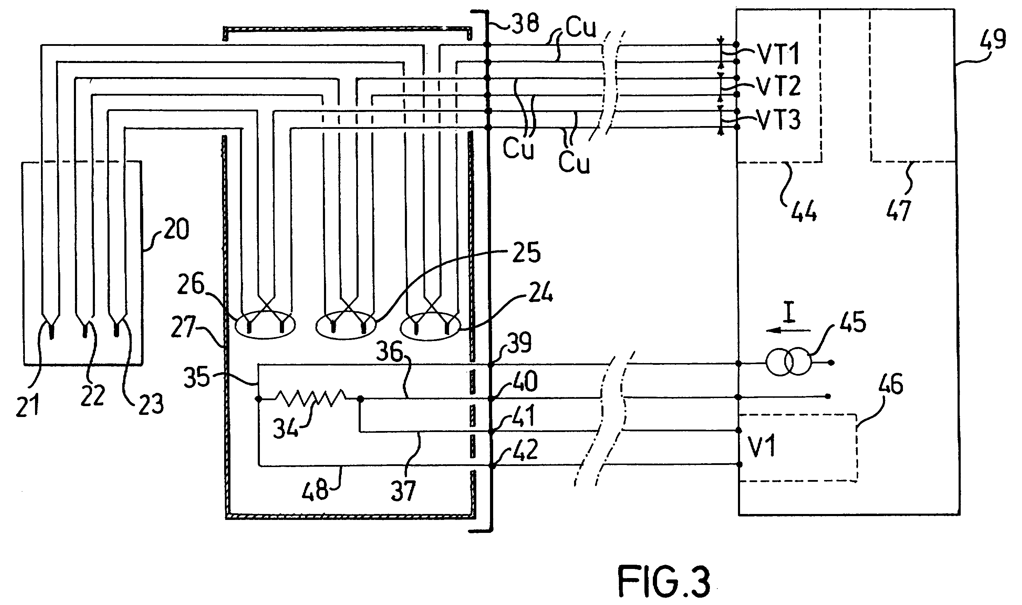

Figure 3 shows, in an essentially circuit diagram form, a measuring system embodying the present invention and employing the integrated measuring unit described.

The thermocouple triad measuring system comprises a measuring probe 20 which contains three thermoelectric junctions 21, 22, 23 directly connected to three pairs of reference junctions 24, 25, 26, respectively.

The reference junctions are housed inside an equalization/thermal insulation case, uncontrolled for temperature, equal on the average to room temperature.

The internal temperature of the case 27 is measured by a thermal resistor 24 of the PT 100 type which is also housed within the case and provided with a first pair of supply terminations 35, 36 and a second pair 37, 48 of measurement terminations. When suitably supplied a controlled constant direct current on the order of a hundred microamperes, the thermal resistor becomes the recipient of a voltage drop which can be detected without any appreciable voltage drops along the line by a high input impedance voltmeter through the measurement terminals.

The outputs of the three thermoelectric elements are connected electrically to a ten-pole connector 38, also having the four outputs 39, 40, 41, 42 of the thermal resistor connected to it.

Through a conventional multicore cable of copper, the connector poles are connected to a conventional data acquisition system 49, e.g. a data logger HP3852S.

A data acquisition system is basically an electronic calculator, preferably a PC, connected by appropriate interfacing boards to physical quantity detecting devices.

When suitably programmed, the acquisition system allows measurements to be taken in a sampled manner, stored, and processed.

It also enables controlled voltages and currents to be supplied to the physical quantity detecting devices, and processes based on the measurements taken to be controlled.

A clear and exhaustive review of the acquisition systems available from the market and their applications and manner of use has been printed in the No. 5 issue of "Selezione di elettronica", May 1991.

The data acquisition system, therefore, receives the thermocouple voltages VT1, VT2, VT3 through interface circuits 44, to sample and A/D convert the signals, supplies the thermal resistor with a constant current I (by means of a constant current generator 45), and receives a voltage VI from the thermal resistor which is related to the temperature of the reference junctions (as sampled and converted to digital coding by circuits 46).

The measuring system is inspected and calibrated by bringing the probe 20 to plural known temperatures, and the case 27 to at least one known temperature within the range of the ambient operation conditions.

Under such conditions, the voltage VT1, VT2, VT3 generated by the different thermocouples can be measured at the predetermined temperatures and the response thereto recorded as temperature varies.

In operation, the measured voltages, each referred to the response diagram of the corresponding thermocouple, enable three temperatures T1, T2, T3 to be found which are coincident with or very close to one another, in the absence of ageing phenomena.

The temperature measured by the probe is with high accuracy the mean of the three temperatures (T1+T2+T3)/3.

The deviations of the individual temperatures from the mean value can be stored into a memory 47 to form a data base describing the relative drift in response of the thermoelectric elements versus time and the measured temperatures.

Taking account of this information, it becomes possible to attach a different weight to the measurement temperatures detected by the different elements to obtain a mean value which is most likely to approximate the actual temperature value with greater accuracy.

This is very important to many industrial plants, in particular thermoelectric plants, where even an error of a few degrees in measuring temperatures from critical areas of the plant would result in adjustment errors with significant variations of the energy yiel and considerable economic implications.

Also possible is to find out any accelerations in the drift and ageing phenomenon and to anticipate the need or suitability of a replacement or overhaul of the sensors, which can therefore be timely planned.

In addition, in the event of faults or breakages suddenly occurring in the individual thermoelectric element which can be readily recognized, the plant would not have to be shut down or the element replaced at once, since the two surviving elements would still provide redundant information to allow the plant to be run reliably.

Obviously, the foregoing description only covers a preferred embodiment of the invention, and many changes may be made thereunto without departing from the scope of the invention as defined by the claims.

For example, the integrated unit could comprise a larger number of thermoelectric elements than 3, for instance 4.

The thermal resistor for measuring the temperature of the reference joints could be a type other than that comprising the four-wire single resistor described, and may consist of a measurement bridge with an external variable resistor, and the measurement may be taken by bridge balancing and current zeroing methods.

Also, the material for the thermocouple may be other than that specified as the preferred material and be selected contingent on applicational requirements.

## Claims

1. An integrated temperature measuring unit with thermocouples, comprising:
a plurality of thermocouples (4,5,6), each forming a measuring joint (N1,N2,N3) and a reference joint, with no intermediate balanced cables interconnecting said measuring joint and said reference joint;
a first protective sheath (16,20) of metal providing a common housing for said measuring joints (N1,N2,N3);
a chamber (10) enclosing said reference joints and formed of a box-type outer case, an interspace (32) of a thermally insulating material, and an inner case (9) of a high thermal conductivity material, provided with a well (8) accommodating said reference joints and a heat-sensitive element (7), said reference joints and said heat-sensitive element (7) being encapsulated within said well by a high thermal conductivity insulating material; and
a second protective sheath (13) of metal accommodating a portion of said thermocouples included between said measuring joints and said reference joints and coupled to said first sheath (16) and said enclosing chamber (10), said enclosing chamber being provided with an output connector (12) for electric connection to said thermocouples and said heat-sensitive element.

2. An integrated unit as in Claim 1, comprising a third metal sheath (3) for individually protecting said thermocouples, said measuring joint of said thermocouples being enclosed within said third sheath.

3. An integrated unit as in either Claim 1 or 2, wherein said first (16) and second (13) metal sheaths are made of a stainless steel, and three said thermocouples (4,5,6) are provided.

4. An integrated unit as in Claims 1, 2, 3, wherein said thermocouples are a NiCrSi-NiSi type, said third sheath (3) is NiCrSi, and said heat-sensitive element (7) is a PT100 thermal resistor.

5. A redundancy-type measuring system including an integrated unit as in the preceding claims and a data acquisition system connected electrically to said output connector (12,38) to detect the voltage generated by said thermocouples and an electric signal generated by said heat-sensitive element (7,34).

6. A measuring system as in Claim 5, including a means (45) of powering said heat-sensitive element.

7. A measuring system as in Claim 6, wherein said electric signal generated by said heat-sensitive element is a voltage.

8. A measuring system as in Claims 5, 6, 7, including a means (49) of converting the voltage generated by each of said thermocouples to a temperature indication and processing said temperature indications and calculating a mean temperature value.

9. A system as in Claim 8, wherein said mean temperature value is the mean of said temperatures weighed as an inverse function of the deviations of said temperatures from said mean temperature.

10. A system as in Claim 8, including a means of storing (47) the relative response drift of said thermocouple.

## Patentansprüche

1. Integrierte Themperaturmeßeinheit mit Thermoelementen, bestehend aus:
mehreren Thermoelementen (4, 5, 6 ), von denen jedes eine Meßstelle (N1,N2,N3) und eine Bezugsstelle ohne die Meßstelle und die Bezugsstelle verbindende symmetrische Zwischenkabel bildet;
einer ersten Schutzhülle (16,20) aus Metall, die ein gemeinsames Gehäuse für die Meßstellen (N1,N2,N3) bildet;
einer Kammer (10), die aus einem kastenähnlichen Außengehäuse gebildet ist und die Bezugsstellen, einen Zwischenraum (32) aus wärmeisolierendem Material und ein Innengehäuse (9) aus einem hochwärmeleitendem Material umgibt, das mit einem Behälter (8) versehen ist, der die Bezugsstellen und ein wärmesensitives Element (7) aufnimmt, wobei die Bezugsstellen und das wärmesensitive Element in dem Behälter durch ein hochwärmeleitendes Isoliermaterial eingekapselt sind; und
einer zweiten Schutzhülle (13) aus Metall, die einen Abschnitt der Thermoelemente aufnimmt, der sich zwischen den Meßstellen und den Bezugsstellen befindet und mit der ersten Hülle (16) und der umgebenden Kammer (10) verbunden ist, wobei die umgebende Kammer mit einem Ausgangsanschluß (12) zur elektrischen Verbindung mit den Thermoelementen und dem wärmesensitiven Element versehen ist.

2. Integrierte Einheit nach Anspruch 1, aufweisend eine dritte Metallhülle (3) zum individuellen Schutz der Thermoelemente, wobei die Meßstelle der Thermoelemente in der dritten Hülle aufgenommen ist.

3. Integrierte Einheit nach 1 oder 2, bei der die erste und zweite Metallhülle (16), (13) aus rostfreiem Stahl hergestellt sind, und drei Thermoelemente (4,5,6) vorgesehen sind.

4. Integrierte Einheit nach Anspruch 1, 2, 3, bei der die Thermoelemente vom NiCrSi-NiSi Typ sind, die dritte Hülle (3) aus NiCrSi besteht, und das wärmesensitive Element (7) ein PT100 Wärmewiderstand ist.

5. Meßsystem vom Redundanztyp mit einer integrierten Einheit nach einemder vorhergehenden Ansprüche und einem Datenerfassunssystem, das mit dem Ausgangsanschluß (12,38) elektrisch verbunden ist, um die von dem Thermoelement erzeugte Spannung und ein von dem wärmesensitiven Element (7,34) erzeugtes Signal zu erfassen.

6. Meßsystem nach Anspruch 5 ,mit einer Einrichtung (45)zur Versorgung des wärmesensitiven Elements mit Energie.

7. Meßsystem nach Anspruch 6, bei dem das von dem wärmesensitiven Element erzeugte Signal eine Spannung ist.

8. Meßsystem nach 5, 6, 7, mit einer Einrichtung (49) zur Umwandlung der von jedem der Thermoelemente erzeugten Spannung in eine Temperaturanzeige und zur Verarbeitung der Temperaturanzeige und Berechnung eines Temperaturmittelwertes.

9. System nach 8, bei dem der Temperaturmittelwert der Mittelwert der als inverse Funktion der Abweichungen der Temperaturen von der mittleren Temperatur gewichteten Temperaturen ist.

10. System nach 8, mit einer Einrichtung (47) zum Speichern der relativen Ansprechabdrift des Thermoelements.

## Revendications

1. Unité de mesure de température intégrée avec des thermocouples, comprenant :
une pluralité de thermocouples (4, 5, 6) formant chacun une jonction de mesure (N1, N2, N3) et une jonction de référence, sans aucun câble compensé intermédiaire pour interconnecter ladite jonction de mesure et ladite jonction de référence,
une première gaine protectrice (16, 20) d'un métal réalisant un logement commun pour lesdites jonctions de mesure (N1, N2, N3),
une chambre (10) renfermant lesdites jonctions de référence et formée d'une enveloppe extérieure du type boîtier, un espace intermédiaire (32) d'un matériau thermiquement isolant, et une enveloppe intérieure (9) d'un matériau à forte conductivité thermique, munie d'un puits (8) logeant lesdites jonctions de référence et un élément thermosensible (7), lesdites jonctions de référence et ledit élément thermosensible (7) étant encapsulés à l'intérieur grâce à un matériau isolant à forte conductivité thermique, et
une seconde gaine protectrice (13) d'un métal logeant une partie desdits thermocouples comprise entre lesdites jonctions de mesure et lesdites jonctions de référence et reliée à ladite première gaine (16) et à ladite chambre de renfermement (10), ladite chambre de renfermement étant munie d'un connecteur de sortie (12) destiné à une connexion électrique vers lesdits thermocouples et ledit élément thermosensible.

2. Unité intégrée selon la revendication 1, comprenant une troisième gaine métallique (3) destinée à protéger individuellement lesdits thermocouples, ladite jonction de mesure desdits thermocouples étant enfermée à l'intérieur de ladite troisième gaine.

3. Unité intégrée selon l'une ou l'autre de la revendication 1 ou de la revendication 2, dans laquelle lesdites première (16) et seconde (13) gaines métalliques sont faites d'acier inoxydable et les trois dits thermocouples (4, 5, 6) sont disposés.

4. Unité intégrée selon les revendications 1, 2, 3, dans laquelle lesdits thermocouples sont du type NiCrSi-NiSi, ladite troisième gaine (3) est faite de NiCrSi, et ledit élément thermosensible (7) est une thermistance PT100.

5. Système de mesure du type à redondance comprenant une unité intégrée selon les revendications précédentes et un système d'acquisition de données relié électriquement audit connecteur de sortie (12, 38) afin de détecter la tension générée par lesdits thermocouples et un signal électrique généré par ledit élément thermosensible (7, 34).

6. Système de mesure selon la revendication 5, comprenant un moyen (45) d'alimentation dudit élément thermosensible.

7. Système de mesure selon la revendication 6, dans lequel ledit signal électrique généré par ledit élément thermosensible est une tension.

8. Système de mesure selon la revendication 5, 6, 7, comprenant un moyen (49) de conversion de la tension générée par chacun desdits thermocouples en une indication de température, et de traitement desdites indications de température ainsi que de calcul d'une valeur de température moyenne.

9. Système selon la revendication 8, dans lequel ladite valeur de température moyenne représente la moyenne desdites températures, pondérées comme une fonction inverse des écarts desdites températures par rapport à ladite température moyenne.

10. Système selon la revendication 8, comprenant un moyen de mémorisation (47) de la dérive relative de réponse dudit thermocouple.
